# EUROPEAN PATENT APPLICATION

(11) **EP 4 745 885 A1**
(43) Date of publication of application: **20.05.2026**
(21) Application number: 24213119.1
(22) Date of filing: 14.11.2024
(51) Int. Cl.: G06T 7/246, G06T 7/70, G06T 7/20

(54) **SYSTEM FOR GENERATING THREE-DIMENSIONAL CONTENT FROM A MULTICAMERA TWO-DIMENSIONAL VIDEO STREAM OF A SPORTING EVENT**

(30) Priority: 13.11.2024 PT 2024119832
(71) Applicant: NOS Inovação, S.A., 4460-191 Porto (PT); Instituto Politécnico De Leiria, 2411-901 Leiria (PT)
(72) Inventor: PINTO SEQUEIRA DOS SANTOS GRAÇA, JORGE FILIPE, 4460-191 SENHORA DA HORA, PORTO (PT); NUNES FERREIRA, JOÃO MIGUEL, 4460-191 SENHORA DA HORA (PT); CARMEJO GARÇÃO, TELMA, 4460-191 SENHORA DA HORA (PT); GOMES ANDRÉ, LUÍS CARLOS, 4460-191 SENHORA DA HORA (PT); REIS MALHEIRO, PEDRO JOSÉ, 4460-191 SENHORA DA HORA (PT); COUTINHO DE SOUSA, JOANA, 4460-191 SENHORA DA HORA (PT); PATRÍCIO FRANCO, JOÃO PEDRO, 2525-484 ATOUGUIA DA BALEIA (PT); SANTOS MARQUES, FRANCISCO, 2410-051 LEIRIA (PT); SOUSA RODRIGUES, NUNO CARLOS, 2410-051 LEIRIA (PT); AGUIAR RIBEIRO, ROBERTO, 2010-467 LEIRIA (PT); GONÇALVES RODRIGUES MARTO, ANABELA, 2410-270 LEIRIA (PT)
(74) Representative: do Nascimento Gomes, Rui

(57) **Abstract**

The present application describes a system for generating three-dimensional content (e) from a multicamera two-dimensional video stream (a) of a sporting event.

The system comprises a processor unit (2) comprising an object detection module (2.1), a tracking module (2.2), a transformation module (2.3) and an event data generator module (2.5), that are interoperatively coupled to each other. The system developed makes it possible to generate three-dimensional content (e) from two-dimensional video streams (a, b) more efficiently, taking into account the challenges that broadcasting a sporting event imposes.

## Description

### TECHINCAL FIELD

The present application relates to systems and methods of generating three-dimensional content of a scene which includes a plurality of objects disposed on a background plane. More particularly, the present application relates to systems and methods of generating three-dimensional content from video frames captured by a multiple video camera, in a multicamera environment.

### PRIOR ART

Traditionally, sporting events are broadcast in video images captured by a multi-camera environment, in which several cameras are positioned around the event in different positions and angles, so as to be able to provide the spectator with different perspectives and levels of detail of the event, and enhance the spectator experience. Normally, several cameras capture video images of the sporting event at the same time and the respective video signals are then transmitted at a given time, where certain cameras are used to capture only a small part of the event, to provide details of an action, while other cameras are used to capture an overall view of the event, however providing very few discernible details.

In this context, modelling such two-dimension video frames into the three-dimensional space provides spectators with more immersive experiences. However, the multi-camera environment represents a complex challenge, since the transition between cameras capturing different parts of the event can make it difficult to model a comprehensive and contextualized three-dimensional space, in particular, the detection of objects and/or actions across consecutive video frames captured by different cameras.

In addition, the dynamic nature that can characterize a sporting event also makes it difficult to modulate a three-dimensional space of the event, since the boundaries of the sporting event captured by the different cameras may change. This is particularly true for football events, for example, when the three-dimensional model has to take into account the movement of the player and the ball, which can make it difficult to accurately simulate these movements and consequently generate the associated three-dimensional content.

The present solution intended to innovatively overcome such issues.

### SUMMARY OF THE DISCLOSURE

It is an object of the present application a system for generating three-dimensional content from a multicamera two-dimensional video stream of a sporting event.

The system developed makes it possible to generate three-dimensional content from two-dimensional video streams more efficiently, taking into account the challenges that broadcasting a sporting event imposes, related to the dynamic nature of the event, which could be played out at high speed and with constant transitions between its participants, and also to the multiplicity of cameras that capture it, each one focusing on the event through a specific event capture plan.

According to an advantageous configuration of the system, it comprises a processor unit comprising an object detection module, a tracking module, a transformation module and an event data generator module, that are interoperatively coupled to each other.

More particularly, the object detection module is configured to detect at least one object in a video frame and to determine the position of said objects in a two-dimensional video frame coordinate space, the tracking module is configured to track the position of the detected objects in the two-dimensional video frame coordinate space, across multiple consecutive video frames, the transformation module is configured to convert the position of detected objects in the two-dimensional video frame coordinate space into a position in a three-dimensional sports field coordinate space using an homography matrix, and the event data generator module is configured to generate, for each video frame, a three-dimensional event data record including: a timestamp and the positions in the three-dimensional sports field coordinate space of the detected objects in said timestamp.

Therefore, the system described in the present application implements a hybrid processing scheme that includes a frame-by-frame approach, designed to individually process each video frame in order to detect and position the different objects captured, followed by a batch frame approach to track the detected objects and also to detect actions occurring throughout the set of consecutive frames.

To this end, analysis schemes that use image processing through machine learning models make it possible to optimise the detection and tracking tasks, even in the event of occlusions, achieving an efficient mapping of the two-dimensional content carried by each video frame into a three-dimensional reference coordinate space and thus generating three-dimensional content that will be the basis for creating an immersive simulation environment.

### DESCRIPTION OF FIGURES

Figure 1 - representation of a first embodiment of the system for generating three-dimensional content from a multicamera two-dimensional video stream of a sporting event described in the present application, wherein the reference signs represent:
   a - video stream;
   b - video frame;
   c - object data;
   e - three-dimensional event data record;
   1 - receiver unit;
   2 - processor unit;
   2.1 - object detection module;
   2.2 - tracking module;
   2.3 -transformation module;
   2.5 - event data generator.
Figure 2 - representation of a second embodiment of the system for generating three-dimensional content from a multicamera two-dimensional video stream of a sporting event described in the present application, wherein the processing unit further comprises an action prediction module; the reference signs represent:
   a - video stream;
   b - video frame;
   c - object data;
   d - action data;
   e - three-dimensional event data record;
   1 - receiver unit;
   2 - processor unit;
   2.1 - object detection module;
   2.2 - tracking module;
   2.3 - transformation module;
   2.4 - action prediction module;
   2.5 - event data generator.

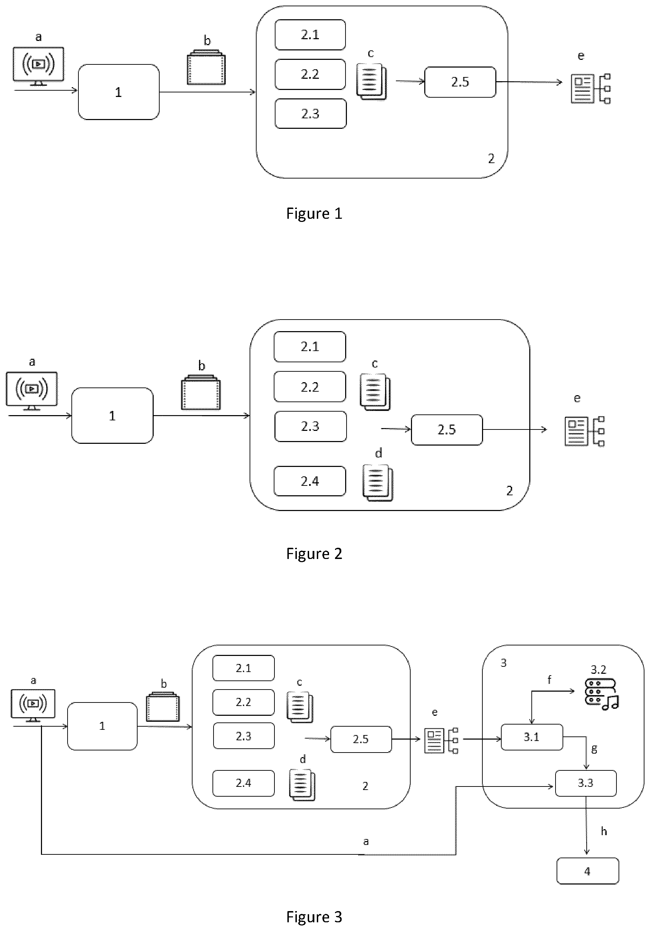

Figure 3 - representation of a third embodiment of the system for generating three-dimensional content from a multicamera two-dimensional video stream of a sporting event described in the present application, further comprising an immersive simulation unit and wherein the reference signs represent:
   a - video stream;
   b - video frame;
   c - object data;
   d - action data;
   e - three-dimensional event data record;
   f - audio clip;
   g - spatial audio signal;
   h - immersive multimedia stream;
   1- receiver unit;
   2 - processor unit;
   2.1 - object detection module;
   2.2 - tracking module;
   2.3 - transformation module;
   2.4 - action prediction module;
   2.5 - event data generator module;
   3 - immersive simulation unit;
   3.1 - spatial audio generator;
   3.2 - audio database;
   3.3 - immersive content generator;
   4 - spectator's device.

### DETAILED DESCRIPTION

The present application relates to a system for generating three-dimensional content (e) from a two-dimensional multi-camera video stream (a) of a sporting event.

The type of broadcasting architecture used to transmit the sporting event, which for example, may be implemented by means of an analogue, digital or web infrastructure, is irrelevant to the implementation of the system herein described and to the realisation of the technical advantages associated with it. In this sense, the term video stream (a) will be used to refer generically to the two-dimensional data transmitted by the broadcasting system, which is made up of a plurality of video frames (b) that sequentially carry the video content that will be consumed by the spectators' device (4).

The system described in the present application is developed with a view to processing a video stream (a) of a sporting event, in order to respond to the shortcomings of the state of the art in effectively mapping three-dimensional content (e) from two-dimensional video frames (b) obtained in a multi-camera environment, on the basis of which it is possible to provide a simulation environment and an immersive experience for the spectator. However, this system is also obviously applicable without any changes to any type of event that shares the same dynamic characteristics as a sporting event, be it a football match or a tennis match, such as a film or a music concert.

In the context of this application, three-dimensional content (e) refers to spatial information related to the detection, identification and positioning in a three-dimensional reference coordinate space of objects and actions, captured from the plurality of two-dimensional video frames (b) that make up the video stream (a) to be broadcast. Specifically, it is the spatial information, modelled through three-dimensional content (e), which provides the spectator with a comprehensive and contextualised virtual environment and which is the basis for creating immersive experiences. To this end, and considering the dynamic nature of a sporting event and its multi-camera capture, the generation of three-dimensional content (e) is much more demanding than when only one camera is used. In fact, it is necessary to respond effectively not only to the dynamics inherent in the unfolding of the event itself, but also to the transition between cameras, each focusing on a specific event capture plane, which can lead to the occurrence of occlusions that make it difficult to detect, identify and position objects and actions.

In order to meet these demands, the system described in the present application implements a hybrid processing scheme that includes a frame-by-frame approach, designed to individually process each video frame (b) in order to detect and position the different objects captured, followed by a batch frame approach to track the detected objects and to detect actions occurring throughout the set of consecutive frames (b). To this end, analysis schemes that use image processing through machine learning models make it possible to optimise the detection and tracking tasks, even in the event of occlusions, making it efficient to map the two-dimensional content carried by each video frame into a three-dimensional reference coordinate space and thus generate three-dimensional content (e) that will be the basis for creating an immersive simulation environment.

In the context of the present application, an immersive simulation environment refers to a virtual environment that interacts with the spectator by stimulating his senses.

Specifically, three-dimensional content (e) can be used to generate an immersive signal (g), such as a spatial audio signal (g), from which the spectator will have a 360-degree audio perception of the actions taking place during a sporting event. More specifically, the spatial audio signal (g) could be provided depending on the positioning of objects in the three-dimensional reference coordinate space, such as players and the ball, and the action that is taking place, for example the occurrence of a shot or a foul, with the respective audio clip (f) being triggered and where the respective audio features are adapted depending on the spectator's predefined position in that three-dimensional reference coordinate space. For example, considering that the sporting event concerns a football match and that the spectator's pre-defined location is a position in the three-dimensional reference coordinate space corresponding to the centre of the football pitch, determining the three-dimensional content (e) makes it possible to generate a spatial audio signal (g) that varies in terms of volume, pitch and directionality of the sound, depending on the positioning in the three-dimensional reference coordinate space of the detected action. In other words, for the same action, such as a shot on goal, the volume, pitch and directionality of the corresponding audio clip (f) will vary depending on the positioning of that action in the three-dimensional reference coordinate space, and may correspond to a spatial audio signal (g) with a higher or lower volume, and coming from a direction that is more to the left or more to the right, in relation to that position of the spectator. In this context, a spatial audio signal (g) can be produced using state-of-the-art mechanisms already known for this purpose, and the innovation described in this application therefore lies in the generation of the three-dimensional content (e) that will feed these mechanisms.

In this sense, the spectator can use one or more devices adapted to provide the respective sensory stimulation, and these devices can be headphones, through which spatial audio is provided. However, various other devices for providing different immersive signals (g) adapted to provide other sensory stimuli can also be used, such as virtual reality or augmented reality glasses, that are designed to provide the spectator with an experience of visualisation and interaction with the simulation environment, based on the three-dimensional content (e) generated. In one example of realisation, the system, by providing an immersive simulation environment that can be realised through the provision of an immersive spatial audio signal (g, h), is particularly advantageous for visually impaired spectators, allowing them to have a more engaging experience of a sporting event.

The processing underlying the generation of the three-dimensional content (e), through which immersive signals (g) may be produced, takes place in parallel with the transmission of the sporting event, with a fusion stage being envisaged between the video stream (a) and the immersive signal (g), to generate the immersive multimedia stream (h) that will feed the spectators' device (4). In addition, to ensure that the system operates in real-time or near real-time, a processing scheme based on machine learning was used to optimise the object and action detection processes and thus reducing the processing time for generating three-dimensional content (e), without harming the efficiency of these tasks.

The different ways of realising the system, respecting the principles and objectives already described, will be presented below.

In a preferred aspect of the system described in the present application, it is comprised by:
A receiver unit (1) configured to receive a video stream (a) of a sporting event, comprised of a plurality of video frames (b);
A processor unit (2) comprising an object detection module (2.1), a tracking module (2.2), a transformation module (2.3) and an event data generator module (2.5), said modules being interoperatively coupled and wherein,
   the object detection module (2.1) comprises one or more processors configured to execute a machine learning model adapted to detect at least one object in a video frame (b) and to determine the position of said objects in a two-dimensional video frame coordinate space;
   the tracking module (2.2) comprises one or more processors configured to track the position of the detected objects in the two-dimensional video frame coordinate space, across multiple consecutive video frames (b);
   the transformation module (2.3) comprises one or more processors configured to:
      - execute a machine learning model adapted to detect a set of keypoints in a video frame (b), generating keypoint data; a keypoint referring to a landmark on a sports field where the sporting event takes place;
      - generate an homography matrix based on keypoint data, to convert the position of detected objects in the two-dimensional video frame coordinate space into a position in a three-dimensional sports field coordinate space using said homography matrix;
   the processor unit (2) being configured to generate object data (c) for each video frame (b), including: a timestamp, at least one detected object and the respective position in the three-dimensional sports field coordinate space, and keypoint data;
   the event data generator module (2.5) being configured to process at least object data (c) in order to generate, for each video frame (b), a three-dimensional event data record (e) including: a timestamp and the positions in the three-dimensional sports field coordinate space of the detected objects in said timestamp.

The system is an integration of specific computational modules (2.1, 2.2, 2.3., 2.5), which are configured to carry out a hybrid processing scheme that guarantees an effective analysis of each video frame (b), to detect and position objects such as players and the ball, and of a batch of consecutive video frames (b), to extract comprehensive and contextualised information, and on the basis of which the position of a same object (a player or a ball) may be consistently tracked over time, i.e. in a sequence of consecutive video frames (b). The mapping of the tracked objects in the two-dimensional video frame coordinate space provides a reliable perception of the object's movements which provides a general understanding of the context underlying the event. Therefore, the continuous tracking of one or several objects over a sequence of consecutive video frames (b) makes it possible to deal with the occurrence of occlusions or other difficulties imposed by a multi-camera environment, where each camera has its own specific event capture plan. Converting the contextualised information in the two-dimensional video frame coordinate space, which is extracted through the hybrid processing scheme, into the three-dimensional sports field coordinate space (the reference coordinate space) makes it possible to map the position of objects on the sports field and generate three-dimensional event data records (e).

In one embodiment of the system, the machine learning model being executed by the one or more processors of the object detection module (2.1) is a machine learning algorithm trained to detect one or a combination of at least the following objects: a ball, a player, a referee. Said machine learning model may be a convolutional neural network model configured to output, for each video frame (b):
- a bounding box around each detected object;
- a label information indicating the type of object;
- a confidence score associated with the detection action performed.

Optionally, the machine learning model is YOLO.

In another embodiment of the system, the one or more processors of the tracking module (2.2) are configured to:
- predict the position of the detected objects in the two-dimensional video frame coordinate space in a subsequent video frame (b) based on motion parameters determined from at least a previous and a current video frame (b); optionally, the one or more processors are configured to implement a Kalman Filter to predict the position of the detected objects in the two-dimensional video frame coordinate space in a subsequent video frame (b) based on motion parameters determined from at least a previous and a current video frame (b); wherein, said motion parameters relate to at least: velocity and acceleration;
- identify a detected object in a current video frame (b) and match its position in the two-dimensional video frame coordinate space with the predicted position calculated from a previous video frame (b); optionally, the one or more processors are configured to execute an Hungarian algorithm to match the position of detected objects in the two-dimensional video frame coordinate space in the current video frame (b) with the predicted position from the previous video frame (b).

In another embodiment of the system, the one or more processors of the tracking module (2.2) are further configured to:
- process at least bounding box information to match the position of a detected object in the two-dimensional video frame coordinate space with the predicted position calculated from a previous video frame (b).

In addition, the one or more processors of the tracking module (2.2) are further configured to:
- execute a convolutional neural network model trained to extract appearance-based features from each detected object; and
- to identify detected objects in a current video frame (b) based on extract appearance-based features; optionally, the extract appearance-based features relate to color and/or texture.

In this way, appearance re-identification is executed to further strengthen the tracking action, by extracting visual features (e.g., color and texture) from the detected objects and by using such information to maintain consistent object identification, even when they are occluded or appear very close to each other, which is an advantage in dynamic environments, such as a sporting event.

In another embodiment of the system, the machine learning model being executed by the one or more processors of the transformation module (2.3) is a machine learning algorithm trained to detect landmarks on a sports field; a landmark referring to at least field lines or line intersections on the sports field. More specifically, the machine learning model may be a convolution neural network model comprising:
- a stem stage configured to process a video frame (b) in order to generate high-to-low resolution video frames;
- a processing stage configured to process high-to-low resolution video frames to extract feature maps at various resolutions;
- a fusion stage configured to fuse feature maps generated by the processing stage in order to generate detailed feature maps of a video frame (b),
the one or more processors of the transformation module (2.3) being configured to detect the set of keypoints for each video frame (b) based on the respective detailed feature maps; optionally, the machine learning algorithm is a HRNet algorithm.

In another embodiment of the system, the transformation module (2.3) further comprises:
- a calibration submodule configured to analyze a brightness parameter around each detected keypoint in the HSV color space and to adjust a keypoint position to a brightest spot nearby if the detected keypoint's brightness is below a predefined threshold.

This calibration stage allows the transformation module (2.3) to filter out keypoints and objects that are detected as anomalous. For example, if a keypoint is detected in an area where it shouldn't exist (e.g. outside the sports field boundaries), it is discarded; or if the transformed coordinates of a player or a ball are outside the field boundaries after the homography transformation, they are also filtered out.

In another embodiment of the system, the one or more processors of the transformation module (2.3) are configured to compute the homography matrix based on at least four keypoints. This specific number of keypoints is very advantageous for ensuring that detected objects are positioned accurately in the sports field, regardless of the camera angle or perspective. In addition, the one or more processors of the transformation module (2.3) are further configured to implement a computer vision technique adapted to estimate the position of at least one keypoint of the set of keypoints in a current video frame (b) by analyzing pixel movements between a previous and the current video frame (b), if the number of detected keypoints is less than four; optionally the computer vision technique is Optical flow.

In another embodiment of the system, the processing unit (2) further comprises an action prediction module (2.4). Said action prediction module (2.4) comprising one or more processors configured to execute a machine learning model adapted to predict the occurrence of at least one action across multiple video frames (b). More particularly, the machine learning model is a machine learning algorithm trained to detect one or a combination of at least the following actions: pass, shot, ball reception, foul, corner, freekick, throw in, penalty, goalkeeper save, goal, start of the game and end of the game.

According to this particular embodiment, the processing unit (2) is further configured to generate action data (d) for each video frame (b), including: a timestamp, an action prediction and a confidence score indicating the probability of the predicted action occurs in said video frame (b). In its turn, the event data generator module (2.5) of the processing unit (2) is further configured to process object data (c) and action data (d) to generate, for each video frame (b), a three-dimensional event data record (e) including: at least one action prediction, the respective video frames timestamps for which the confidence score is above a threshold value and the positions in the three-dimensional sports field coordinate space of the detected objects in said timestamps.

In another embodiment of the system, the machine learning model executed by the one or more processors of the action prediction module (2.4) is comprised of a pipeline of the following modules:
- a temporal convolutional neural network module comprised of multiple multi-scale three-dimensional convolutional layers, wherein each convolutional layer being programmed to operate over time, class and feature dimensions at different temporal resolutions, allowing the network to model both short-term and long-term dependencies; the temporal convolutional neural network module being configured to process pre-extracted feature vectors of each video frame (b) in orderto output a set of *C* × *f* feature vectors, where C is the number of action classes and *f* is the number of features per class; a class being a type of action;

Therefore, by integrating a temporal convolutional neural network it is possible to capture information at different temporal resolutions. This is important because actions in soccer can vary in length: some actions (e.g., a foul) happen quickly, while others (e.g., the buildup to a goal) may unfold over several seconds. The use of multiple scales allows the network to recognize patterns that vary in duration. Therefore, it captures the relationships between frames (b) that are far apart in time, which is crucial for action spotting where the context leading up to an event is often important. In addition, by producing feature vectors for each class at every frame, the temporal CNN allows the network to keep track of the temporal evolution of each type of action.
- a segmentation module configured to process the *C* × *f* feature vectors for each video frame (b) according to a sigmoid activation function, in order to produce segmentation scores for each class, representing the probability of an action of class c occurs in a video frame (b);
- an action spotting module comprised of a pipeline of multiple temporal max-pooling layers and multiple three-dimensional convolutional layers; the module being configured to process the segmentation scores for each class, to output a set of *N_pred* vectors, where *N_pred* is the number of predicted actions, each vector containing:
   - a confidence score indicating the probability of a predicted action occurring;
   - the action type;
   - a timestamp associated with the video frame (b) in which the predicted action occurs,
and wherein, the one or more processors of the action prediction unit (2.4) are further configured to predict at least one action type and the timestamps of the video frames (b) in which said action occurs based on the set of *N_pred* vectors.

In addition, the machine learning model is trained to predict actions using a loss function that is a weighted sum of a temporal segmentation and action spotting loss functions; optionally, the action spotting module is configured to execute an iterative one-to-one matching algorithm configured to iteratively couple each action prediction with ground truth actions.

In another embodiment of the system, it further comprising an immersive simulation unit (3); said immersive simulation unit (3) comprising a spatial generator (3.1) comprised of one or more processors configured to model a sports field in a three-dimensional reference coordinate space and to process the three-dimensional event data record (e) in order to at least:
- map in said reference coordinate space the position of the detected objects.

In another embodiment of the system, the immersive simulation unit (3) comprises:
An audio database (3.2) comprised by a plurality of audio records, each record associating an audio clip (f) to an action type; and
An immersive content generator (3.3);
and wherein
the one or more processors of the spatial audio generator (3.1) are further configured to process three-dimensional event data records (e), in order to, for each action prediction:
   - configure audio features of audio clips (f) associated to the action prediction based on the position of the detected objects in relation to a spectator's preconfigured position in the reference coordinate space, generating spatial audio signals (g); said audio features relate to at least: volume, pitch and directionality;
   and wherein,
the immersive content generator (3.3) is configured to output spatial audio signals (g), when a timestamp associated with an action prediction matches with a timestamp of the sporting event video stream (a).

More particularly, the immersive content generator (3.3) comprises a synchronization module comprising one or more processors configured to, periodically:
- synchronize the timestamps of the video stream (a) received by the receiver unit (1) with timestamps related to action predictions included in three-dimensional event data records (e); and
merge the video stream (a) received by the receiver unit (1) with the spatial audio signals (g), generating an immersive multimedia stream (h) adapted for playback on a spectator device (4).

In this way, an immersive and detailed experience is offered to the spectator, based on the three-dimensional event data record (e) that is generated by the processing unit (2) and which allows comprehensive and contextualised information to be extracted from the video frames (b) that make up the video stream (a) received.

Of course, the preferred embodiments shown above are combinable, in the different possible forms, being herein avoided the repetition all such combinations.

## Claims

1. System for generating three-dimensional content from a multicamera two-dimensional video stream of a sporting event; the system comprising:
A receiver unit (1) configured to receive a video stream (a) of a sporting event, comprised of a plurality of video frames (b);
A processor unit (2) comprising an object detection module (2.1), a tracking module (2.2), a transformation module (2.3) and an event data generator module (2.5), said modules being interoperatively coupled and wherein,
the object detection module (2.1) comprises one or more processors configured to execute a machine learning model adapted to detect at least one object in a video frame (b) and to determine the position of said objects in a two-dimensional video frame coordinate space;
the tracking module (2.2) comprises one or more processors configured to track the position of the detected objects in the two-dimensional video frame coordinate space, across multiple consecutive video frames (b);
the transformation module (2.3) comprises one or more processors configured to:
- execute a machine learning model adapted to detect a set of keypoints in a video frame (b), generating keypoint data; a keypoint referring to a landmark on a sports field where the sporting event takes place;
- generate an homography matrix based on keypoint data, to convert the position of detected objects in the two-dimensional video frame coordinate space into a position in a three-dimensional sports field coordinate space using said homography matrix;
the processor unit (2) being configured to generate object data (c) for each video frame (b), including: a timestamp, at least one detected object and the respective position in the three-dimensional sports field coordinate space, and keypoint data;
the event data generator module (2.5) being configured to process at least object data (c) in order to generate, for each video frame (b), a three-dimensional event data record (e) including: a timestamp and the positions in the three-dimensional sports field coordinate space of the detected objects in said timestamp.

2. System according to claim 1, wherein the machine learning model being executed by the one or more processors of the object detection module (2.1) is a machine learning algorithm trained to detect one or a combination of at least the following objects: a ball, a player, a referee.

3. System according to claim 2, wherein the machine learning model is a convolutional neural network model configured to output, for each video frame (b):
- a bounding box around each detected object;
- a label information indicating the type of object;
- a confidence score associated with the detection action performed;
optionally, the machine learning model is YOLO.

4. System according to any of the previous claims, wherein the one or more processors of the tracking module (2.2) are configured to:
- predict the position of the detected objects in the two-dimensional video frame coordinate space in a subsequent video frame (b) based on motion parameters determined from at least a previous and a current video frame (b); optionally, the one or more processors are configured to implement a Kalman Filter to predict the position of the detected objects in the two-dimensional video frame coordinate space in a subsequent video frame (b) based on motion parameters determined from at least a previous and a current video frame (b); wherein, said motion parameters relate to at least: velocity and acceleration;
- identify a detected object in a current video frame (b) and match its position in the two-dimensional video frame coordinate space with the predicted position calculated from a previous video frame (b); optionally, the one or more processors are configured to execute an Hungarian algorithm to match the position of detected objects in the two-dimensional video frame coordinate space in the current video frame (b) with the predicted position from the previous video frame (b).

5. System according to claims 3 and 4, wherein the one or more processors of the tracking module (2.2) are further configured to:
- process at least bounding box information to match the position of a detected object in the two-dimensional video frame coordinate space with the predicted position calculated from a previous video frame (b).

6. System according to claims 4 or 5, wherein the one or more processors of the tracking module (2.2) are further configured to:
- execute a convolutional neural network model trained to extract appearance-based features from each detected object; and
- to identify detected objects in a current video frame (b) based on extract appearance-based features; optionally, the extract appearance-based features relate to color and/or texture.

7. System according to any of the previous claims, wherein the machine learning model being executed by the one or more processors of the transformation module (2.3) is a machine learning algorithm trained to detect landmarks on a sports field; a landmark referring to at least field lines or line intersections on the sports field.

8. System according to claim 7, wherein the machine learning model is a convolution neural network model comprising:
- a stem stage configured to process a video frame (b) in order to generate high-to-low resolution video frames;
- a processing stage configured to process high-to-low resolution video frames to extract feature maps at various resolutions;
- a fusion stage configured to fuse feature maps generated by the processing stage in order to generate detailed feature maps of a video frame (b),
the one or more processors of the transformation module (2.3) being configured to detect the set of keypoints for each video frame (b) based on the respective detailed feature maps;
optionally, the machine learning algorithm is a HRNet algorithm.

9. System according to any of the previous claims, wherein the transformation module (2.3) further comprises:
- a calibration submodule configured to analyze a brightness parameter around each detected keypoint in the HSV color space and to adjust a keypoint position to a brightest spot nearby if the detected keypoint's brightness is below a predefined threshold.

10. System according to any of the previous claims, wherein the one or more processors of the transformation module (2.3) are configured to compute the homography matrix based on at least four keypoints; and wherein
the one or more processors are further configured to implement a computer vision technique adapted to estimate the position of at least one keypoint of the set of keypoints in a current video frame (b) by analyzing pixel movements between a previous and the current video frame (b), if the number of detected keypoints is less than four; optionally the computer vision technique is Optical flow.

11. System according to any of the previous claims, wherein the processing unit (2) further comprises an action prediction module (2.4); said action prediction module (2.4) comprising one or more processors configured to execute a machine learning model adapted to predict the occurrence of at least one action across multiple video frames (b); the machine learning model is a machine learning algorithm trained to detect one or a combination of at least the following actions: pass, shot, ball reception, foul, corner, freekick, throw in, penalty, goalkeeper save, goal, start of the game and end of the game; and wherein,
the processing unit (2) being further configured to generate action data (d) for each video frame (b), including: a timestamp, an action prediction and a confidence score indicating the probability of the predicted action occurs in said video frame (b); and wherein,
the event data generator module (2.5) of the processing unit (2) is further configured to process object data (c) and action data (d) to generate, for each video frame (b), a three-dimensional event data record (e) including: at least one action prediction, the respective video frames timestamps for which the confidence score is above a threshold value and the positions in the three-dimensional sports field coordinate space of the detected objects in said timestamps.

12. System according to claim 11, wherein the machine learning model is comprised of a pipeline of the following modules:
- a temporal convolutional neural network module comprised of multiple multi-scale three-dimensional convolutional layers, wherein each convolutional layer being programmed to operate over time, class and feature dimensions at different temporal resolutions; the temporal convolutional neural network module being configured to process pre-extracted feature vectors of each video frame (b) in orderto output a set of *C* × *f* feature vectors, where C is the number of action classes and *f* is the number of features per class; a class being a type of action;
- a segmentation module configured to process the *C* × *f* feature vectors for each video frame (b) according to a sigmoid activation function, in order to produce segmentation scores for each class, representing the probability of an action of class c occurs in a video frame (b);
- an action spotting module comprised of a pipeline of multiple temporal max-pooling layers and multiple three-dimensional convolutional layers; the module being configured to process the segmentation scores for each class, to output a set of *N_pred* vectors, where *N_pred* is the number of predicted actions, each vector containing:
- a confidence score indicating the probability of a predicted action occurring;
- the action type;
- a timestamp associated with the video frame (b) in which the predicted action occurs;
and wherein,
the one or more processors of the action prediction unit (2.4) being further configured to predict at least one action type and the timestamps of the video frames (b) in which said action occurs based on the set of *N_pred* vectors;
and wherein,
the machine learning model is trained to predict actions using a loss function that is a weighted sum of a temporal segmentation and action spotting loss functions;
and
optionally, the action spotting module is configured to execute an iterative one-to-one matching algorithm configured to iteratively couple each action prediction with ground truth actions.

13. The system according to any of the previous claims, further comprising an immersive simulation unit (3); said immersive simulation unit (3) comprising a spatial generator (3.1) comprised of one or more processors configured to model a sports field in a three-dimensional reference coordinate space and to process the three-dimensional event data record (e) in order to at least:
- map in said reference coordinate space the position of the detected objects.

14. The system according to any of the previous claims 11 to 13, wherein the immersive simulation unit (3) comprises:
An audio database (3.2) comprised by a plurality of audio records, each record associating an audio clip (f) to an action type; and
An immersive content generator (3.3);
and wherein
the one or more processors of the spatial audio generator (3.1) are further configured to process three-dimensional event data records (e), in order to, for each action prediction:
- configure audio features of audio clips (f) associated to the action prediction based on the position of the detected objects in relation to a spectator's preconfigured position in the reference coordinate space, generating spatial audio signals (g); said audio features relate to at least: volume, pitch and directionality;
and wherein,
the immersive content generator (3.3) is configured to output spatial audio signals (g), when a timestamp associated with an action prediction matches with a timestamp of the sporting event video stream (a).

15. The system according to claim 14, wherein the immersive content generator (3.3) comprises a synchronization module comprising one or more processors configured to, periodically:
- synchronize the timestamps of the video stream (a) received by the receiver unit (1) with timestamps related to action predictions included in three-dimensional event data records (e); and
merge the video stream (a) received by the receiver unit (1) with the spatial audio signals (g), generating an immersive multimedia stream (h) adapted for playback on a spectator device (4).
